# EUROPÄISCHE PATENTSCHRIFT

(11) **EP 0 685 861 B1**
(45) Veröffentlichungstag und Bekanntmachung des Hinweises auf die Patenterteilung: **13.01.1999**
(21) Anmeldenummer: 95107756.9
(22) Anmeldetag: 19.05.1995
(51) Int. Cl.: H01H 13/70, H01H 23/04

(54) **Installationsschalter zur Befehlsgabe**
Electrical installation control switch
Interrupteur d'installation de commande

(30) Priorität: 31.05.1994 DE 9408899 U
(43) Veröffentlichungstag der Anmeldung: 06.12.1995
(73) Patentinhaber: SIEMENS AKTIENGESELLSCHAFT, 80333 München (DE)
(72) Erfinder: Symontschyk, Walter, Dipl.-Ing.(FH), D-91056 Erlangen (DE)

(56) Entgegenhaltungen:
- EP-A- 0 446 396
- DE-A- 4 115 741
- DE-A- 4 137 888
- DE-U- 9 218 404
- US-A- 4 866 221

## Beschreibung

Die Erfindung bezieht sich auf einen Installationsschalter der programmierbaren Gebaudesystemtechnik, der mit zumindest einem Haupt bedienorgan im Zusammenwirken mit zumindest einem weiteren Bedienelement zur Betätigung elektrischer Befehlsgeber arbeitet. Ein derartiger Installationsschalter ist bekannt (EP-A-0 446 396). Die bekannte Einrichtung zur Befehlsgabe für programmierbare Gebaudesystemtechnik ermöglicht durch kleinere Tasten eine Vorwahl von Funktionen, die durch ein größeres Bedienglied geschaltet werden.

Installationsschalter der Gebaudesystemtechnik können andererseits ohne eine Vorwahl wie konventionelle Installationsschalter ausgeführt sein. Sie können nebeneinander angeordnet werden, flach für Aufputzmontage oder zum Einbau in üblichen Unterputzdosen ausgeführt werden. Derartige Installationsschalter können insbesondere über einen Bus in einem Gebaudesystem zusammenwirken.

Bei der bekannten Einrichtung zur Befehlsgabe für programmierbare Gebaudesystemtechnik (EP-A-0 446 396) ist also ein Handbedienungsorgan gegen die anderen hervorgehoben, wobei die anderen Handbedienungsorgane jeweils mit einer Auswahlfunktion vorbelegt sind. So kann durch die Vorbelegung ein bestimmtes Objekt, oder es können bestimmte Geräte, angesprochen werden und über das hervorgehobene Handbedienungsorgan dann eine elektrische Bedienfunktion, beispielsweise Schalten, durchgeführt werden.

Für die elektrische Verstellung von Spiegeln bei Kraftfahrzeugen ist es bekannt (US-A-4 866 221), in einen Bedienkranz für die Verstellung des Spiegels einen zentralen Schaltknopf anzuordnen, der einen rechten oder einen linken Spiegel auszuwählen ermöglicht. Eine derartige Einrichtung ist nicht wie ein Installationsschalter mit Abdeckrahmen konzipiert.

Der Erfindung liegt die Aufgabe zugrunde, Installationsschalter so weiterzuentwickeln, daß Schalter, Taster und allgemein Befehlsgeber der konventionellen Installationstechnik zumindest hinsichtlich ihrer Abdeckungen, also insbesondere des Designs, weiter eingesetzt werden können.

Die Lösung der geschilderten Aufgabe erfolgt nach der Erfindung durch einen Installationsschalter nach Patentanspruch 1. Danach ist im Bereich des Abdeckrahmens zumindest ein weiteres kleinflächigeres Bedienelement ausgebildet, das mit dem Hauptbedienungsorgan funktionell zusammenarbeitet. Die Bedienfläche eines konventionellen Bedienelements kann dadurch beibehalten werden.

Das weitere Bedienelement oder die weiteren Bedienelemente, die auf elektrische Befehlsgeber arbeiten können, sind vorteilhaft elektrisch mit dem Befehlsgeber des Hauptbedienungsorgans verbunden oder zu einem gemeinsamen Anschluß, insbesondere Busanschluß, geführt. Hierbei sind nach Art einer Einschubtechnik an entsprechend gestalteten Abdeckrahmen des Hauptbedienungsorgans die weiteren Bedienelemente anordenbar.

Die elektrische Verbindung eines weiteren Bedienelements kann zum Hauptbedienorgan unterhalb des Abdeckrahmens erfolgen. Die elektrische Verbindung weiterer Bedienelemente zum Hauptbedienorgan kann auch mittels Kontaktelementen im Abdeckrahmen erfolgen.

Für gewisse Anwendungsfälle ist es vorteilhaft, die weiteren Bedienelemente mit Sperren zu versehen, die durch Betätigen des Hauptbedienorgans entsperrbar sind. Es wird hierdurch sichergestellt, daß eine eingestellte Funktion zunächst ausgeführt wird.

In an sich bekannter Weise können die weiteren Bedienelemente mit einer Sensorfläche versehen sein. Zumindest eines der weiteren Bedienelemente kann hinsichtlich seiner Funktion auch vorbelegt sein, sei es konstruktiv hardwaremäßig oder durch Software. Die Vorbelegung kann für viele Anwendungsfälle vorteilhaft mittels einer Timereinrichtung zurücksetzbar sein.

Zumindest eines der weiteren Bedienelemente kann mit einer Vorrichtung für drahtloses Empfangen oder drahtloses Senden ausgeführt sein. In an sich bekannter Weise kann zumindest eines der weiteren Bedienelemente mit einem Display für Anzeigen versehen sein.

Die Erfindung soll nun anhand von in der Zeichnung grob schematisch wiedergegebenen Ausführungsbeispielen näher erläutert werden:
In FIG 1 ist ein Bedienorgan mit seitlich angebauten weiteren Bedienelementen verschiedenartiger Ausführung in Aufsicht wiedergegeben.
In FIG 2 ist eine Anordnung nach FIG 1 in Seitenansicht dargestellt.
In FIG 3 ist der Anschluß eines weiteren Bedienelements am Rahmen des Hauptbedienorgans als Einzelheit veranschaulicht. In FIG 4 ist eine andere Ausführung nach Art von FIG 3 veranschaulicht.

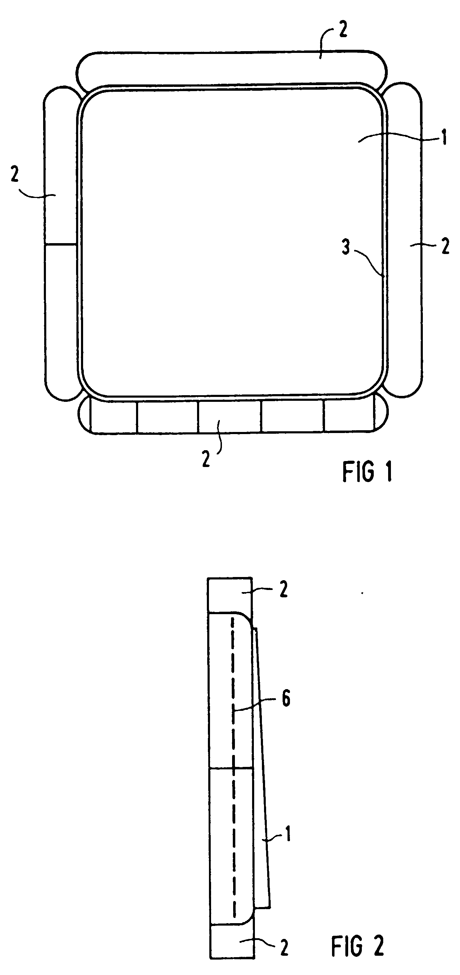

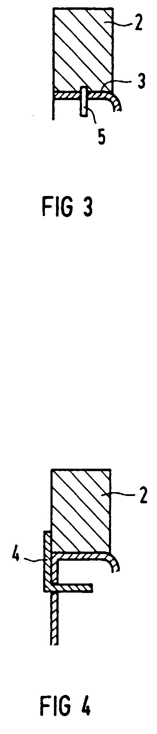

Der Installationsschalter nach FIG 1 dient der Befehlsgabe für programmierbare Gebäudesystemtechnik. Er weist ein Bedienorgan 1 zur Betätigung elektronischer Befehlsgeber auf und ist in einem Abdeckrahmen 3 angeordnet. Im Bereich des Abdeckrahmens 3 sind weitere kleinflächigere Bedienelemente 2 ausgebildet, die mit dem Hauptbedienorgan 1 funktionell zusammenarbeiten. Die Anordnung der weiteren Bedienelemente 2 am oder im Rahmen 3 kann nach Art einer Einschubtechnik an einem entsprechend gestalteten Abdeckrahmen erfolgen. Die elektrische Verbindung der weiteren Bedienelemente 2 zum Hauptbedienorgan 1 kann unterhalb des Abdeckrahmens nach Art von Folienleitern 4 gemäß FIG 4 erfolgen. Die elektrische Verbindung der weiteren Bedienelemente 2 zum Hauptbedienorgan 1 kann auch mittels Kontaktelementen 5 in einem Abdeckrahmen 3 nach FIG 3 erfolgen. Elektrische Befehlsgeber können auf einer Leiterplatte 6 nach FIG 2 angeordnet sein.

Die weiteren Bedienelemente 2 können Sperren aufweisen, die durch Betätigen des Hauptbedienorgans 1 entsperrbar sind. Die weiteren Bedienelemente können mit einer Sensorfläche versehen sein. Zumindest eines der weiteren Bedienelemente kann hinsichtlich des Funktion vorbelegt sein. Es ist dann sichergestellt, daß die vorbelegte Funktion durch Betätigen des Hauptbedienorgans 1 durchgeführt wird. Die Vorbelegung kann mittels einer Timereinrichtung zurücksetzbar sein. Zumindest eines der weiteren Bedienelemente 2 kann mit einer Vorrichtung für drahtlosen Empfang oder drahtloses Senden versehen sein. Mittels Display-Einrichtungen können die verschiedenartigsten Zustände und Funktionen angezeigt werden.

## Patentansprüche

1. Installationsschalter der programmierbaren Gebäudesystemtechnik, der mit zumindest einem Hauptbedienorgan (1) im Zusammenwirken mit zumindest einem weiteren Bedienelement (2) zur Betätigung elektrischer Befehlsgeber arbeitet,
**dadurch gekennzeichnet,**
daß er mit einem gesonderten Abdeckrahmen (3) nach Art der Installationstechnik versehen ist, in dessen Bereich zumindest ein weiteres kleinflächigeres Bedienelement (2) ausgebildet ist, das mit dem Hauptbedienorgan (1) funktionell zusammenarbeitet.

2. Installationsschalter nach Anspruch 1,
**dadurch gekennzeichnet,**
daß das weitere Bedienelement (2) oder die weiteren Bedienelemente (2), die auf elektrische Befehlsgeber arbeiten, elektrisch mit dem Befehlsgeber des Hauptbedienorgans (1) verbunden sind oder zu einem gemeinsamen Anschluß, insbesondere Busanschluß, geführt sind, nach Art einer Einschubtechnik an entsprechend gestalteten Abdeckrahmen (3) des Hauptbedienorgans (1) angeordnet ist.

3. Installationsschalter nach Anspruch 2,
**dadurch gekennzeichnet,**
daß die elektrische Verbindung der weiteren Bedienelemente (2) zum Hauptbedienorgan (1) unterhalb des Abdeckrahmens durch einen Folienleiter (4) erfolgt.

4. Installationsschalter nach Anspruch 2,
**dadurch gekennzeichnet,**
daß die elektrische Verbindung der weiteren Bedienelemente (2) zum Hauptbedienorgan (1) mittels Kontaktelementen (5) im Abdeckrahmen (3) erfolgt.

5. Installationsschalter nach Anspruch 1 oder einem der vorhergehenden Ansprüche,
**dadurch gekennzeichnet,**
daß die weiteren Bedienelemente (2) Sperren aufweisen, die durch Betätigen des Hauptbedienorgans (1) entsperrbar sind.

6. Installationsschalter nach Anspruch 1 oder einem der vorhergehenden Ansprüche,
**dadurch gekennzeichnet,**
daß die weiteren Bedienelemente (2) mit einer Sensorfläche versehen sind.

7. Installationsschalter nach Anspruch 1 oder einem der vorhergehenden Ansprüche,
**dadurch gekennzeichnet,**
daß zumindest eines der weiteren Bedienelemente (2) hinsichtlich der Funktion vorbelegt ist.

8. Installationsschalter nach Anspruch 7,
**dadurch gekennzeichnet,**
daß die Vorbelegung mittels einer Timereinrichtung zurücksetzbar ist.

9. Installationsschalter nach Anspruch 1 oder einem der vorhergehenden Ansprüche,
**dadurch gekennzeichnet,**
daß zumindest eines der weiteren Bedienelemente (2) mit einer Vorrichtung für drahtlosen Empfang oder drahtloses Senden ausgeführt ist.

10. Installationsschalter nach Anspruch 1 oder einem der vorhergehenden Ansprüche,
**dadurch gekennzeichnet,**
daß zumindest eines der weiteren Bedienelemente (2) mit einem Display für Anzeigen versehen ist.

## Claims

1. Installation switch of programmable building systems engineering, which switch works with at least one main operating part (1) in cooperation with at least one further operating element (2) for the actuation of electrical control stations, characterised in that it is provided with a separate covering frame (3) in the manner of installation engineering, in the region of which covering frame there is constructed at least one further smaller-surface operating element (2), which cooperates functionally with the main operating part (1).

2. Installation switch according to claim 1, characterised in that the further operating element (2) or the further operating elements (2), which work on electrical control stations, are electrically connected to the control station of the main operating part (1) or are led to a common terminal, in particular a bus terminal, is/are arranged on appropriately shaped covering frames (3) of the main operating part (1) in the manner of a withdrawable-unit design.

3. Installation switch according to claim 2, characterised in that the electrical connection of the further operating elements (2) to the main operating part (1) takes place underneath the covering frame by a foil conductor (4).

4. Installation switch according to claim 2, characterised in that the electrical connection of the further operating elements (2) to the main operating part (1) takes place by means of contact elements (5) in the covering frame (3).

5. Installation switch according to claim 1 or one of the preceding claims, characterised in that the further operating elements (2) have blocking devices which can be unlatched by actuating the main operating part (1).

6. Installation switching according to claim 1 or one of the preceding claims, characterised in that the further operating elements (2) are provided with a sensor surface.

7. Installation switch according to claim 1 or one of the preceding claims, characterised in that at least one of the further operating elements (2) is preassigned in terms of function.

8. Installation switch according to claim 7, characterised in that the pre-assignment can be reset by means of a timer device.

9. Installation switch according to claim 1 or one of the preceding claims, characterised in that at least one of the further operating elements (2) is constructed with a device for wireless receiving or wireless transmitting.

10. Installation switch according to claim 1 or one of the preceding claims, characterised in that at least one of the further operating elements (2) is provided with a display for read-outs.

## Revendications

1. Interrupteur d'installation électrique de la technique programmable des systèmes de bâtiments, qui fonctionne par au moins un organe (1) de commande principale en coopération avec au moins un élément (2) de commande supplémentaire servant à l'actionnement d'émetteurs d'instructions électriques, caractérisé en ce qu'il est muni d'un cadre (3) de recouvrement distinct comme dans la technique d'une installation électrique, dans la région duquel est réalisé au moins un élément (2) de commande supplémentaire d'assez petite surface qui coopère du point de vue fonctionnel avec l'organe (1) de commande principale.

2. Interrupteur d'installation électrique suivant la revendication 1. caractérisé en ce que l'élément (2) de commande supplémentaire ou les éléments (2) de commande supplémentaires, qui fonctionne(nt) sur des émetteurs d'instructions électriques, sont reliés du point de vue électrique à l'émetteur d'instruction de l'organe (1) de commande principale ou sont envoyés à une borne commune, notamment à une borne de bus, sont montés comme dans une technique de rack sur des cadres (3) de recouvrement conformés en conséquence de l'élément (1) de commande principale.

3. Interrupteur d'installation électrique suivant la revendication 2. caractérisé en ce que la liaison électrique de l'élément (2) de commande supplémentaire à l'organe (1) de commande principale s'effectue au-dessous du cadre de recouvrement par un conducteur (4) à ruban.

4. Interrupteur d'installation électrique suivant la revendication 2. caractérisé en ce que la liaison électrique de l'élément (2) de commande supplémentaire à l'organe (1) de commande principale s'effectue au moyen d'éléments (5) de contact dans le cadre (3) de recouvrement.

5. Interrupteur d'installation électrique suivant la revendication 1 ou l'une des revendications précédentes, caractérisé en ce que les éléments (2) de commande supplémentaires comportent des dispositifs de blocage qui peuvent être débloqués en actionnant l'organe (1) de commande principale.

6. Interrupteur d'installation électrique suivant la revendication 1 ou l'une des revendications précédentes, caractérisé en ce que les éléments (2) de commande supplémentaires sont munis d'une surface formant capteur.

7. Interrupteur d'installation électrique suivant la revendication 1 ou l'une des revendications précédentes, caractérisé en ce qu'au moins l'un des éléments (2) de commande supplémentaires est préaffecté dans sa fonction.

8. Interrupteur d'installation électrique suivant la revendication 7, caractérisé en ce que la préaffectation peut être remise à l'état initial au moyen d'un dispositif de minuterie.

9. Interrupteur d'installation électrique suivant la revendication 1 ou l'une des revendications précédentes, caractérisé en ce qu'au moins l'un des éléments (2) de commande supplémentaires est réalisé par un dispositif pour la réception sans fil ou l'émission sans fil.

10. Interrupteur d'installation électrique suivant la revendication 1 ou l'une des revendications précédentes, caractérisé en ce qu'au moins l'un des éléments (2) de commande supplémentaires est muni d'un dispositif d'affichage (Display) pour l'affichage.
